# EUROPEAN PATENT APPLICATION

(11) **EP 2 894 200 A1**
(43) Date of publication of application: **15.07.2015**
(21) Application number: 14150888.7
(22) Date of filing: 13.01.2014
(51) Int. Cl.: C09B 61/00

(54) **Process for production of a dye preparation**

(71) Applicant: Rubia Exploitatie B.V., 5223 DE 's Hertogenbosch (NL)
(72) Inventor: Derksen, Goverdina Christina Helena, 4651 RZ Steenbergen (NL)
(74) Representative: Roqué Rosell, Núria

(57) **Abstract**

The invention pertains to a process for the production of a dye preparation from plant material, in particular madder root or the areal parts of weld, which allows efficient separation of the desired compounds from the less desired compounds, and which can be carried out in the absence of organic solvents.

The process comprises the steps of
- providing plant material to be extracted in particulate form,
- contacting the particulate plant material with an aqueous medium to form a first slurry of particulate plant material in the aqueous medium,
- holding the slurry for a period of at least 5 minutes,
- if the pH of the slurry after the holding step is 5 or higher, adapting the pH of the slurry to a value of below 5,
- aging the slurry for a period of at least 5 minutes,
- subjecting the aged slurry to a solid-liquid separation step to form a solid plant material fraction and a first aqueous liquid fraction,
- contacting the solid fraction resulting from the solid-liquid separation step with an aqueous medium to form a second slurry with a pH of at least 8,
- subjecting the second slurry to a solid-liquid separation step to form a solid plant material fraction and a dye preparation second aqueous liquid fraction.

## Description

The invention pertains to a process for production of a dye preparation from plant material.

The production of dye preparation from plant material has long been known in the art. Examples of plant material which have been used for this purpose are the roots of the madder plant (*Rubia tinctorum* L.) and the aereal parts of the weld plant (*Reseda luteola* L.)
Dye preparations obtained from plant material are suitable for use in many applications, including the dying of natural fibers, textiles and leather, and in the manufacture of pigments. Dyes obtained from plant material have the advantage over synthetic dyes that they are derived from a renewable resource, and that their isolation is often less objectionable from an environmental point of view than chemical synthesis of the dye in question.

A problem which occurs in the production of dye preparations from plant material is that the amount of dye present in the plant material is relatively low, and that the plant material contains large amounts of a wide variety of other compounds. This makes it difficult to prepare a dye preparation in high yield, without substantial dye loss to other fractions, or large amounts of undesired compounds in the dye fraction. There is need in the art for a process for the production of dye preparations from plant material which allows efficient separation of the desired compounds from the less desired compounds. Additionally, it would be advantageous if such a process could be carried out in the absence of organic solvents, as these may be less preferred from an environmental point of view.

The present invention provides a process which solves these problems.

The present invention pertains to a process for the production of a dye preparation from plant material comprising the steps of
- providing plant material to be extracted in particulate form,
- contacting the particulate plant material with an aqueous medium to form a first slurry of particulate plant material in the aqueous medium,
- holding the slurry for a period of at least 5 minutes,
- if the pH of the slurry after the holding step is 5 or higher, adapting the pH of the slurry to a value of below 5,
- aging the slurry for a period of at least 5 minutes,
- subjecting the aged slurry to a solid-liquid separation step to form a solid plant material fraction and a first aqueous liquid fraction,
- contacting the solid fraction resulting from the solid-liquid separation step with an aqueous medium to form a second slurry with a pH of at least 8,
- subjecting the second slurry to a solid-liquid separation step to form a solid plant material fraction and a dye preparation second aqueous liquid fraction.

The liquid fraction resulting from the last solid-liquid separation is the dye preparation according to the invention. It can be used as such, but it can also be further processed as desired. This will be discussed in more detail below.

It has been found that the selection of the specific combination of solid-liquid separation steps, holding steps, and pH adjustment steps makes for a process which provides a dye preparation in an efficient manner, with efficient removal of other components. Further advantages of the present invention will become clear from the further specification.

The various steps of the process according to the invention will be discussed in more detail below.

The first step in the process according to the invention is the provision of the plant material to be extracted in particulate form.
Plant material from which dye preparations can be prepared are known in the art. Examples include the roots of the madder plant (*Rubia tinctorum* L.) and the areal parts or of the weld plant (*Reseda luteola* L.).

In one embodiments, the starting material is madder root, which may be fresh or dried.
In another embodiment, the starting material is the aereal parts of the weld plant, which again may be fresh or dried.

The provision of the plant material in particulate form can be carried out by methods known in the art, including washing, drying, and cutting or grinding. The particulate material generally has a particle size below 30 mm, more specifically below 20 mm, more specifically below 10 mm, although much smaller particle sizes may also be used. Although the minimum particle size is not critical, an average particle size of at least 0.1 mm may be mentioned as a general value for a lower limit. The suitable particle size depends on extraction efficiency, which is improved with smaller particle size, the costs associated with particle size reduction, and engineering considerations, like available apparatus and the viscosity of the medium to be processed. It is within the scope of the skilled person to determine a suitable particle size.

The plant material in particulate form is then contacted with an aqueous medium to form a first slurry.
The amount of aqueous medium is not critical. On the one hand, enough medium is added to ensure that a processable slurry is obtained. On the other hand, the addition of very large amounts of aqueous medium is to be avoided as it will lead to large waste streams. In one embodiment, the aqueous medium is provided in such an amount that the weight ratio of plant material to aqueous medium is in the range of 1:5 to 1:30, in particular 1:5 to 1:15.
The aqueous medium generally is water, although the presence of other components is not necessarily excluded. In one embodiment it may be preferred for the aqueous medium to have an organic solvent content of less than 15 wt.%, preferably less than 10 wt.%, more preferably less than 5 wt.%, in particular less than 2 wt.%.

The slurry is subjected to a holding step for a period of at least 5 minutes. In the holding step, the dye compounds, which are present in the plant material in the form of glycosides are hydrolysed by enzymes in the plant, to release the dye compounds. This process can be indicated as endogenous liquefaction, or enzymatic endogenous conversion.

The temperature during the holding step should be such that it does not interfere with the endogenous liquefaction process. The temperature generally is below 75°C, in particular below 70°C, more in particular below 65°C. The minimum temperature is less critical, although lower temperatures may require longer holding times. A temperature of at least 5°C is generally suitable. In one embodiment, the temperature is selected in the range of 15-40°C.

The pH during the holding step is not critical, and may, e.g., be in the range of 4-10, in particular 5-9. Operating in a pH range of 6-8, in particular 6-7 is considered advantageous, because this has been found to be optimal for the endogenous liquefaction. Additionally, working at a pH of 6-7 means that water can be used in preparing the slurry. Addition of acid, base, or salt can be dispensed with.

Suitable time frames for the holding step can vary within wide ranges, and will depend on the process conditions (pH, temperature, reactor volume, whether or not the medium is agitated, etc.). The minimum time depends on the time required to effect the desired degree of endogenous liquefaction. On the other hand, once a suitable degree of endogenous liquefaction has been obtained, further holding may not be required. Holding time is at least 5 minutes, in particular at least 30 minutes, more specifically at least 1 hour. For large scale reactors, e.g., above 50 liter, or low temperatures, e.g., 0-15°C, much longer holding times may be mentioned, e.g., at least 4 hours, or at least 10 hours. Holding times above 48 hours are generally not required. For reasons of processing efficiency a holding time of at most 24 hours may be preferred.

It is preferred for the holding step to be carried out under agitation, e.g., stirring or shaking as this will increase the interaction between the medium and the plant material, and stimulates the endogenous liquefaction process.

At least where the plant material is madder root it is preferred for the holding step to be carried out in the presence of oxygen. Oxygen can be provided to the reaction mixture by stirring or by more intensive means like bubbling an oxygen-containing gas, e.g., air, though the reaction mixture, and/or by the provision of oxygen-generating compounds such as H₂O₂.
The background to this is a follows:
For madder root, an important dye compound is alizarin or 1,2-dihydroxyanthraquinone. Alizarin occurs in madder root as its glycoside, ruberythric acid. During the holding step, ruberythric acid is hydrolysed to form alizarin by cleaving off the disaccharide group, which step is indicated as endogenous liquefaction. In addition to ruberythric acid, madder root comprises another glycoside, namely lucidin primeveroside, which contains the same disaccharide as ruberythric acid. During the holding step, lucidin primeveroside can be hydrolysed to form lucidin, which is a known mutagenic agent. It has been found that if the holding step is carried out in the presence of oxygen, enzymes in the madder root convert lucidin primeveroside to non-mutagenic nordamnacanthal rather than to mutagenic lucidin. Therefore, in particular where the plant material is madder root, it is preferred for the holding step to be carried out in the presence of oxygen, provided, e.g., by stirring, or by the other means described above.

Once the holding step has been completed, the next step in the process according to the invention is adapting the pH of the slurry to a value below 5, if the pH is not already at a value of below 5.
It has been found that adjustment to a value below 5 makes for an efficient process with low dye loss in the subsequent solid-liquid separation steps. It may be preferred to adjust the pH to a value below 4.5. Decreasing the pH to very low value will not improve the results of the process, and will require the addition of further acid. It may therefore be preferred for the pH to be adjusted to a value within the range of 2 to 5, in particular 2 to 4.5, more in particular 3 to 4.5.
Adjustment of the pH can be carried out using suitable acids. Suitable acids include strong inorganic acids like HCl, HN03, and H2SO4, and organic acids like formic acid and acetic acid. The use of strong acids has the advantage that a substantial decrease in pH can be obtained while adding limited volumes of liquid. The use of inorganic acids is considered preferred.

After the pH adjustment step, the slurry is subjected to an aging step for a period of at least 5 minutes.
Not wishing to be bound by theory it is believed that aging the slurry at a pH below 5 will ensure that the dye compounds will be retained in the solid phase in the subsequent solid-liquid separation step.
The aging step is carried out for a period of at least 5 minutes. A longer aging step may result in more dye compounds ending up in the solid phase after the solid-liquid separation. Not wishing to be bound by theory it is believed that this may be caused by the dye being present in larger particles, by association of the dye molecules with themselves, or by association with other solid compounds. It is therefore preferred to carry out the aging step for a period of at least 1 hour, in particular at least 4 hours, more in particular at least 8 hours. Aging times above 48 hours are generally not required. For reasons of processing efficiency an aging time of at most 24 hours may be preferred. It is preferred for the aging step to be carried out without agitation, e.g., stirring or shaking, of the slurry. It is believed that agitation may interfere with the agglomeration process mentioned above. Therefore, not applying agitation is believed to result in a higher dye yield in the solid phase obtained during the solid-liquid separation step which follows the aging step.
The temperature during the aging step is not critical. it generally is below 75°C, in particular below 70°C, more in particular below 65°C. The minimum temperature is above 0°C, but otherwise not critical. A temperature of at least 5°C is generally suitable. In one embodiment, the temperature is selected in the range of 15-40°C.

After the aging step, the slurry is subjected to a solid-liquid separation step to form a solid plant material fraction and a first aqueous liquid fraction. The solid-liquid separation step can be carried out in manners known in the art, e.g., via filtration, centrifugation, decantation, or combinations thereof. Centrifugation may be preferred. It is within the scope of the skilled person to select suitable separation conditions.

In the solid-liquid separation step a liquid fraction is obtained which contains soluble plant material, in particular substantial amounts of sugars and soluble salts, but limited amounts of dye components, as the low pH ensures that these are in the solid state, and thus retained in the solid fraction. The liquid fraction can be processed as desired.

The solid fraction contains solid plant materials, and the major part of the dye components. By proper selection of the pH and the solid/liquid separation conditions the loss of dye to the liquid fraction can be minimized.

If so desired, the solid fraction may be subjected to a washing step. This can be done in manners known in the art. It is preferred for the washing step to be carried out with an aqueous liquid with a pH below 5, to prevent inadvertent removal of dye from the system. The preferred pH ranges given above for the slurry also apply to the washing liquid.

The solid fraction resulting from the solid-liquid separation step is then contacted with an aqueous medium to form a second slurry with a pH of at least 8.
The provision of a second slurry with a pH of at least 8 can be carried out in a single step, by contacting the solid plant material fraction with an aqueous medium with a high pH, in particular a pH of at least 8, or in two steps, by contacting the solid plant material fraction with an aqueous medium, and then adjusting the pH of the slurry to a value above 8. The use of a two-step process is considered preferred, as this makes for better pH control.

Depending on whether the step of forming a slurry with a high pH is performed in one step or two steps, the aqueous medium may, e.g., be water (if subsequent pH adjustment is effected, or a solution with a high pH). In both cases, the presence of other components is not necessarily excluded.
The amount of aqueous medium is not critical. On the one hand, enough medium is added to ensure that a processable slurry is obtained. On the other hand, the addition of very large amounts of aqueous medium is to be avoided as it will lead to large waste streams. In one embodiment, the aqueous medium is provided in such an amount that the weight ratio of plant material to aqueous medium is in the range of 1:5 to 1:30, in particular 1:10 to 1:20.

The pH of the second slurry is set at a value of at least 8. This can be done, e.g., using strong inorganic bases such as NaOH or KOH. The use of strong inorganic bases with a monovalent cation is considered preferred, because they allow a high pH to be obtained without addition of much liquid.

The pH of the slurry is set at a value of at least 8. It has been found that if the pH of the slurry is below 8, the yield of colour compounds in the dye extract will be reduced. Not wishing to be bound by theory, it is believed that this is caused by the color compounds having a low solubility at a pH of below 8.
It is preferred for the pH of the slurry to be at least 8.5, more specifically at least 9, still more specifically at least 9.5, more in particular at least 10.
The maximum pH is not critical, but pH values above 12 are expected not to give additional benefit, while they may generate a corrosive environment, and will require the use of additional base. Accordingly, it may be preferred for the pH of the slurry to be set at less than 12, or less than 11. It may be preferred for the pH to be set between 10 and 11.

When the pH of the second slurry has been set to the desired value, a second solid/liquid separation step takes place. As for the previous solid-liquid separation step, the solid-liquid separation step can be carried out in manners known in the art, e.g., via filtration, centrifugation, decantation, or combinations thereof. Centrifugation may be preferred. It is within the scope of the skilled person to select suitable separation conditions.

If so desired, the solid fraction may be subjected to a washing step. This can be done in manners known in the art. It is preferred for the washing step to be carried out with an aqueous liquid with a pH above 8, to prevent inadvertent removal of dye from the system. The preferred pH ranges given above for the slurry also apply to the washing liquid.

The solid product of the solid-liquid separation step comprises fibrous plant material and further solid components. The dye components are mainly present in the liquid fraction. The solid components can be processed as desired.

The liquid product of this solid-liquid separation step is the dye preparation aimed for in the process according to the invention. Due to the specific combination of pH adjustment steps, holding step, and solid-liquid separation steps, the dye preparation thus obtained shows a relatively high yield of dye components, and a relatively low content of other components.

Where the plant material is madder root, the dye preparation will be a liquid with a purple/red/orange colour. In one embodiment, the dye preparation derived from madder root comprises alizarin, generally in an amount of 3 to 50 mg per gram starting madder root (calculated on dry weight), e.g. in an amount of 6 to 30 mg per gram starting madder root. The composition may further contain additional related coloring agents, such as related anthraquinone compounds.

Where the plant material is weld, the dye preparation will be a liquid with a yellow/greenish colour. In one embodiment, the dye preparation derived from weld comprises luteolin, generally in an amount of 5 to 400 mg per gram starting weld material (calculated on dry weight), e.g. in an amount of 10 to 100 mg per gram starting weld material. The composition may further contain additional related coloring agents, such as related flavonoid compounds.

The process according to the invention makes it possible to extract dye components from plant material in relatively high yield. For example, using the process according to the invention it is possible to have more than 40% of the dye components present in the original plant material to end up in the dye extract, in particular at least 45%. In general, 40-90% of the dye components present in the original plant material end up in the dye extract, in particular 45-80 wt.%.

The dye preparation thus obtained can be further processed as desired. It can be used as such to dye various materials, it can be concentrated via water removal, or dried to form a dried material. If so desired, further purification steps may also be carried out.
In one embodiment, the liquid dye preparation of the process according to the invention as described above, if so desired after having been subjected to one or more purification steps, is used as a starting material to form a solid dye preparation. In one embodiment this is effected by acidifying the dye preparation to a pH of below 8, in particular below 7.5, e.g., by using an acid as described above, preferably a strong inorganic acid, in particular HCl.
The dye can be isolated from the acidified product via a solid-liquid separation, e.g., via filtration or centrifugation. The resulting product may be further dried, e.g., via direct drying. It is also possible to reslurry the solid fraction (e.g., the filtrate or centrifugate) followed by spray-drying.

Where the starting material is madder root, the resulting solid product may be a powder with a pink/red/brownish/terra colour. In one embodiment, the solid product derived from madder root has an alizarin content in the range of 30-600 mg alizarin per gram product powder, in particular 50-500 mg alizarin per gram product powder. In one embodiment, the product powder has an alizarin content which is 5 to 15 times the alizarin content of the starting madder root, e.g., 5 to 10 times. The composition may further contain additional related coloring agents, such as related anthraquinone compounds.

Where the plant material is weld, the resulting solid product may be a powder with a yellow/green/kaki colour. In one embodiment, the solid product derived from weld comprises luteolin, generally in an amount of 50 to 2000 mg per gram product powder, e.g. in an amount of 100 to 1000 mg per gram product powder. In one embodiment, the product powder has a luteolin content which is 5 to 15 times the luteolin content of the starting aerial plant material, e.g., 5 to 10 times. The composition may further contain additional related coloring agents, such as related flavonoid compounds.

As indicated above, it is a feature of the present invention that the process does not require the use of organic solvents. This is advantageous for various reasons. In the first place, the presence of organic solvents may interfere with further processing of the dye preparations or generate undesirable side products. Further, the use of organic solvents may be less environmentally friendly, and may require recovery operations, which tend to be energy intensive.
It is therefore preferred for the aqueous medium used in the manufacture of the first slurry and the aqueous medium used in the manufacture of the second slurry to, each independently, have an organic solvent content of less than 15 wt.%, preferably less than 10 wt.%, more preferably less than 5 wt.%, in particular less than 2 wt.%. It is preferred for both the aqueous medium used in the manufacture of the first slurry and the aqueous medium used in the manufacture of the second slurry to have an organic solvent content in the ranges stipulated above.

If washing medium is used in the treatment of the first solid fraction (obtained by solid-liquid separation of the first slurry) or the second solid fraction (obtained by solid-liquid separation of the second slurry) it is preferred for the first washing medium, the second washing medium, or, preferably, both washing mediums, to have an organic content limited as stipulated above.

It is preferred for the dye preparation obtained by the process according to the invention to have an organic solvent content of less than 15 wt.%, preferably less than 10 wt.%, more preferably less than 5 wt.%, in particular less than 2 wt.%. Herein, organic solvent content refers to organic compounds which are liquid at processing temperatures, and, in the present process, miscible with water.

It is noted that the various elements from the description above can be combined. For example, the preferred embodiments for the various steps can be combined.

The present invention will be elucidated with reference to the following examples, without being limited thereto or thereby.

### Example 1: Manufacturin a dye preparation from madder root

Different batches of dried and grinded (sieve 5 mm) madder roots (Rubia *tinctorum* L.) were obtained from Rubia Natural Colours.

The following general procedure was applied at laboratory scale:
Grinded and dried madder root (20 gram) was suspended in water (ratio solid:liquid 1:20 w/w). The pH of the mixture was 6-7. After stirring for 2 hours at room temperature, the suspension was brought to pH 4.3 using HCl in water (19%). After 30 minutes the suspension was centrifuged for 20 minutes at 5931 g at room temperature. The solid fraction was collected. The solid fraction was suspended in a 0,04M NaOH solution (ratio solid:liquid 1:20 w/w), which gives a start pH of 13.0. The suspension was stirred for 2 hours and centrifuged for 30 minutes at 5910 g at room temperature. The solid fraction was removed, and a dye preparation was obtained.

The following table gives the alizarin content of various dye preparations manufactured using the procedure above from different madder root starting materials.

| sample No. | alizarin (extract) mg/g |
|---|---|
| 1 | 66.1 |
| 2 | 155.9 |
| 3 | 183.8 |
| 4 | 269.7 |
| 5 | 272.2 |
| mean | 172.0 |

### Example 2: Manufacturing a dye preparation from reseda

Different batches of dried and grinded (sieve 0.7 mm) weld (Reseda luteola L.) were obtained from Rubia Natural Colours.

The following general procedure was applied at laboratory scale:
Grinded and dried weld (20 gram) was suspended in water (ratio solid:liquid 1:20 w/w). The pH of the mixture was 6-7. After stirring for 2 hours at room temperature, the suspension was brought to pH 4.0 using HCl in water (19%). After 30 minutes the suspension was centrifuged for 20 minutes at 5931 g at room temperature. The solid fraction was collected. The solid fraction was suspended in a 0,04M NaOH solution (ratio solid:liquid 1:20 w/w), which gives a start pH of 12.2. The suspension was stirred for 2 hours and centrifuged for 30 minutes at 5910 g at room temperature. The solid fraction was removed, and a dye preparation was obtained.

The following table gives the luteolin content of various dye preparations manufactured using the procedure above from different reseda starting materials.

| sample No. | luteolin (extract) mg/g |
|---|---|
| 1 | 26.7 |
| 2 | 63.1 |
| mean | 44.9 |

## Claims

1. Process for the production of a dye preparation from plant material comprising the steps of
- providing plant material to be extracted in particulate form,
- contacting the particulate plant material with an aqueous medium to form a first slurry of particulate plant material in the aqueous medium,
- holding the slurry for a period of at least 5 minutes,
- if the pH of the slurry after the holding step is 5 or higher, adapting the pH of the slurry to a value of below 5,
- aging the slurry for a period of at least 5 minutes,
- subjecting the aged slurry to a solid-liquid separation step to form a solid plant material fraction and a first aqueous liquid fraction,
- contacting the solid fraction resulting from the solid-liquid separation step with an aqueous medium to form a second slurry with a pH of at least 8,
- subjecting the second slurry to a solid-liquid separation step to form a solid plant material fraction and a dye preparation second aqueous liquid fraction.

2. Process according to claim 1, wherein the plant material comprises madder root (*Rubia tinctorum* L.).

3. Process according to claim 1, wherein the plant material comprises the areal parts of Reseda *luteola* L.

4. Process according to any one of the preceding claims, wherein the holding step is carried out at a temperature of 5-75°C, in particular 5-70°C, more in particular 5-65°C, and a pH of 4-10, in particular 5-9, more in particular 6-8, still more in particular 6-7.

5. Process according to any one of the preceding claims, wherein the holding step is carried out under agitation, and at least where the plant material is madder root, in the presence of oxygen.

6. Process according to any one of the preceding claims, wherein after the holding step the pH of the slurry is adjusted to a value within the range of 2 to 5, in particular 2 to 4.5, more in particular 3 to 4.5.

7. Process according to any one of the preceding claims, wherein the aging step is carried out for a period of at least 1 hour, in particular at least 4 hours, more in particular at least 8 hours, and/or at most 48 hours, in particular at most 24 hours.

8. Process according to any one of the preceding claims, wherein the aging step is carried out without agitation of the slurry.

9. Process according to any one of the preceding steps, wherein the step of contacting the solid fraction resulting from the solid-liquid separation step with an aqueous medium to form a second slurry with a pH of at least 8 is carried out as a single step, wherein the solid fraction is contacted with an aqueous medium with a pH above 8.

10. Process according to any one of claims 1-8, wherein the step of contacting the solid fraction resulting from the solid-liquid separation step with an aqueous medium to form a second slurry with a pH of at least 8 is carried out in two steps by contacting the solid plant material fraction with an aqueous medium, and then adjusting the pH of the slurry to a value above 8.

11. Process according to any one of the preceding claims, wherein the pH of the second slurry is at least 8.5, more specifically at least 9, still more specifically at least 9.5, more in particular at least 10, and/or less than 12, preferably between 10 and 11.

12. Process according to any one of the preceding claims, wherein the aqueous medium used in the manufacture of the first slurry and the aqueous medium used in the manufacture of the second slurry, each independently, or preferably both, have an organic solvent content of less than 15 wt.%, preferably less than 10 wt.%, more preferably less than 5 wt.%, in particular less than 2 wt.%.

13. Dye preparation derived from madder root, which comprises alizarin in an amount of 30 to 50 mg per gram starting madder root (calculated on dry weight), e.g. in an amount of 6 to 30 mg per gram starting madder root.

14. Dye preparation derived from weld, which comprises luteolin in an amount of 5 to 400 mg per gram starting weld material (calculated on dry weight), e.g. in an amount of 10 to 100 mg per gram starting weld material.

15. Solid dye preparation which, where the starting material is madder root, is a powder with an alizarin content in the range of 30-600 mg alizarin per gram product powder, in particular 50-500 mg alizarin per gram product powder, and which, where the starting material is weld, is a powder with a luteolin content in the range of 50 to 2000 mg per gram product powder, e.g. in an amount of 100 to 1000 mg per gram product powder.
